# EUROPEAN PATENT SPECIFICATION

(11) **EP 3 470 237 B1**
(45) Date of publication and mention of the grant of the patent: **15.05.2024**
(21) Application number: 18199221.5
(22) Date of filing: 09.10.2018
(51) Int. Cl.: B60B 1/00, B60B 21/02, B60B 21/12, B60B 21/10, B60B 9/00

(54) **BICYCLE WHEEL RIM AND WHEEL COMPRISING IT**
FAHRRADRADFELGE UND RAD DAMIT
JANTE DE ROUE DE BICYCLETTE ET ROUE LA COMPRENANT

(30) Priority: 11.10.2017 IT 201700114693
(43) Date of publication of application: 17.04.2019
(73) Proprietor: Campagnolo S.r.l., 36100 Vicenza (VI) (IT)
(72) Inventor: MEGGIOLAN, Mario, I-36051 CREAZZO (Vicenza) (IT)
(74) Representative: Porta & Consulenti Associati S.p.A.

(56) References cited:
- EP-A1- 2 829 417
- EP-A1- 3 208 104
- US-A1- 2015 224 820

## Description

The invention relates to a bicycle wheel rim, as well as a wheel comprising such a rim.

The invention applies to all types of known bicycle wheels, whether of the spoked type, of the disc type and of the type herein called spider wheel, depending on what elements - structural and not - join the hub to the rim. In particular, in a spoked wheel the hub is joined to the rim by a plurality of quite thin, individually tensioned elements; in a spider wheel the hub is joined to the rim through a smaller number of elements having larger section than the spokes and not tensioned, which usually form a single body with the rim, although spokes could anyway be provided for, inside the spider legs, to perform the structural function; in a lenticular or disc wheel, a disc-shaped - though actually frusto-conically shaped element - joins the hub to the rim on each side, although spokes could anyway be provided for between the two disc-shaped elements to perform the structural function, or the spokes can be used only during a manufacturing step of the lenticular wheel, as described in EP 2 674 304 A1 and equivalent US 9,724,959 B2.

In all of the aforementioned types of wheel, the rim can be made in a variety of shapes in radial section.

In the present description and in the attached claims, under "radial section", a section carried out through a half-plane having the axis of rotation of the rim as origin is meant to be indicated. Unless otherwise specified, the term "section" will be used, for the sake of brevity, to indicate a radial section.

In general, in known rims the radially inner region of the rim is suitably designed according to the type of coupling with the hub; the lateral regions of the rim are suitably designed for example according to whether a brake acting on the rim itself or a different braking system or no braking system at all is provided for, and/or whether the wheel is of the lenticular or disc type or of other types; the radially outer region of the rim, which corresponds to the rolling zone of the wheel on the road surface in the normal use of the bicycle, is designed according to the type of tire used.

In the present description and in the attached claims, unless otherwise indicated, the terms "outer" and "inner" refer to the radial direction of the rim, to indicate proximal and distal, respectively, with respect to the axis of rotation of the rim.

In general, modern rims are generically "perforated" or "box-like" elements, namely for weight reasons their section is not solid, following instead a curved or broken or mixed "polygonal" chain, possibly self-intersecting, so that the rim encloses one or more annular cavities, concentric with the rim itself. Along said line, the wall thickness of the rim can be constant or variable.

From the point of view of the configuration of the radially outer region, known rims can be classified on the one hand as rims for tubular or sew-up tires, wherein the radially outer region has, in section, a concavity outwards, which forms a shallow annular channel and, on the other hand, as clincher - tubeless or with inner tube - rims, wherein the radially outer region of the rim has, in section, a deeper annular channel, with lateral flanges projecting outwards (in a substantially radial direction) from the bottom of the channel and folded towards each other at the free end so as to form undercut regions for holding the beads of the clincher.

From the bottom of the channel, radially inwards, the section of the rim can, as mentioned, have a highly varying shape: more or less elongated (rims with low, medium and high profile), more squared or more pointed, symmetrical or asymmetrical, etc.

Considering the upper radial section of a rim arranged with horizontal axis of rotation, this can often be schematized as a U or a V or an X or an inverted A, or a sort of D laid on the bulge.

An review of various rim shapes can be found in US 8,888,195 B1**.**

A feature common to all of the known geometries of bicycle rims is the presence of the aforementioned tire-coupling channel, which makes the radially outer region (namely, the upper part in the arrangement just described) generically concave outwards-again with reference to the radial direction.

For the sake of completeness, it should be mentioned that some known rims are coupled with a solid or substantially solid tire, with a shape corresponding to that of a pneumatic tire, which fills or in any case engages in the channel described above and projects radially outwards of the rim. An example of such a solution can be found in US 2006/0096685 A1**.** Such solid tires, however, make the wheel heavier in an undesired manner, as well as having a substantial cost.

US 2015/0144239 A1 describes a bicycle wheel or tire comprising a ground-contacting surface carried on a movable portion having a degree of freedom about an axis parallel to a circumference of the wheel or tire.

For the sake of completeness, furthermore, it is recalled that before the advent of tires, wheels were solid disc-shaped objects with a certain thickness, namely solid cylinders with a comparatively small height with respect to the diameter, or annular cylinders - namely solids of revolution the generating surface of which is a solid square or rectangle. In these wheels, the radially outer surface is a cylindrical surface, which is flat in radial section. Similar wheels are nowadays in use only in case of toys, models and children's vehicles such as tricycles, and are not suitable at all for the use in a bicycle, both due to the excessive weight, and especially due to the absence of a suitable elasticity, as well as because they require a substantially parallel alignment between road surface and the axis of rotation.

Turning back to modern bicycle wheels, the rims have to satisfy different, sometimes conflicting, requirements, each rim being designed to optimize one or more construction parameters in view of one or more of such requirements.

The main requirements that a bicycle rim should satisfy are lightness, very high stiffness with respect to both axial and radial stresses and, vice-versa, a certain elastic deformability, slidability and, vice-versa, an adequate grip onto the road surface at different inclinations of the bicycle, for example cornering at high speed, as well as good aerodynamics. Such requirements, the fulfillment of which is generally aimed at minimizing the dispersion of the athlete's energies, are even stricter in case of a racing bicycle.

In case of track or racing and also road bicycles, the stiffness of the tire should be maximized so as to minimize the resistance to rolling, given that racing tracks are extremely homogeneous and smooth surfaces and therefore every deformation of the tire causes an energy loss - differently from the case of an off-road bicycle wherein it is appropriate for the tire to be less rigid.

EP3208104A1 discloses a bicycle rim comprising a radially outer tire-engaging portion, sidewalls extending radially inward and a radially inner wall comprising at least one asymmetric protrusion. The radially outer portion is in particular configured for attachment to a tire by using an adhesive.

EP2829417A1 discloses a bicycle wheel comprising a rim and a tire, wherein the rim is in the form of a toroidal element comprising an upper bridge, a lower bridge and two sidewalls. The radially outer region of the toroidal element is the interface zone with the tire, which comprises two lateral wings, that are extensions radially outwardly of the sidewalls, and a "pavement" protruding radially outwardly, corresponding to the central portion of the upper bridge.

The technical problem at the basis of the invention is that of providing a bicycle rim - and a wheel comprising it - which is particularly strong and reliable, and capable of effectively fulfilling at least some of the aforementioned requirements.

In an aspect, the invention relates to a rim of a bicycle wheel as recited in claim 1.

The imaginary partition of the rim is carried out through four imaginary planes perpendicular to the axis of rotation and equidistant to each other, one of which is tangent to the rim on one side thereof, one is tangent to the rim on an opposite side thereof, and two are intermediate between them.

In the rim of the invention, one face of the wall comprises the rolling surface in normal use condition of the wheel of which the rim is part, directly or through the interposition of a coating layer.

In the present description and in the attached claims, under the expression "coating layer", a substantially two-dimensional material is meant to be indicated, even if not necessarily of constant thickness, laid substantially uniformly on the wall, without therefore substantially altering the shape thereof.

In an extremely advantageous manner, the rim of the invention can even be used naked - namely without a pneumatic tire or solid tire - since the "hollow" structure obtained through the wall closed on itself in radial section provides it with a suitable elasticity, and the geometry of its radially outer region, generically convex outwards, allows it to roll over the road surface along a line - in practice, a thin annular band - astride of the median plane when the axis of rotation is substantially parallel to the road surface, and thus with low rolling friction, the lateral slices instead becoming involved in the rolling only when the axis of rotation is tilted with respect to the road surface.

In the present description and in the following claims, under the expression "median plane", a plane perpendicular to the axis of rotation of the rim and passing through an axially intermediate point of the hub to which the rim is intended to be coupled is meant to be indicated.

On the contrary, in bicycle wheels of the prior art, wherein the two axially outer slices of the rim project more outwards with respect to the axially central slice, the presence of a toroidal or similarly shaped air cushion, at least in the radially outer region - or a solid tire embodying a corresponding shape -, is strictly necessary, in order to provide a convex surface suitable for rolling on the road surface at various tilts of the wheel. In case of annular cylinder wheels, the various slices project to the same extent (since their radially outer surface is flat), making the wheel totally unsuitable for the travel condition with tilted axis, as highlighted above.

By making the air cushion useless, the invention brilliantly overcomes all of the drawbacks linked to punctures, lacerations, coming off the seat and explosions of pneumatic tires.

Moreover, the weight of the wheel is advantageously strongly reduced, since there is no pneumatic tire, possible inner tube and trapped-in compressed air - or solid tire.

Moreover, since the wheel lacks any inflation valve, the related cost, weight, consequent "dynamic" imbalance and the risk of malfunctioning with consequent pressure loss are advantageously avoided.

Lastly, the mounting and maintenance of the wheel are simplified.

In a radially outer region of the rim of the invention, the two lateral zones of the wall of the rim curve towards each other and, at the maximum distance from the axis of rotation, they join each other without forming any concave channel or flat wall segment therebetween.

In the present description and in the attached claims, the two lateral zones of the closed wall that forms the rim will sometimes be briefly indicated as "lateral walls".

An imaginary cylinder coaxial to the rim and externally tangent thereto, namely the cylinder with minimum radius capable of enclosing the entire rim, or "enveloping cylinder", intersects the bicycle rim of the invention according to one single circumference. In case there are surface grooves or other deviations from a radial section which is perfectly shaped as an arc of circumference, such enveloping cylinder intersects the rim according to two or more circumferences, comprised anyway within one single thin cylindrical band, having a width comparable to the wall thickness. In known rims, on the other hand, the enveloping cylinder intersects the rim ideally according to two circumferences, in practice according to two spaced cylindrical bands.

The aforementioned thin band can be considered as the intersection between the rim of the invention and an annular cylinder comprised between two concentric cylinders, one of which is the aforementioned enveloping cylinder, and the other has a radius only slightly smaller than the radius of the enveloping cylinder, the difference between the two radii being roughly equal to the thickness of the wall of the rim. Considering the aforementioned annular cylinder means neglecting undesired or deliberately formed surface roughness.

A first radially outer region of the wall is overall radially convex outwards (when viewed in the radial section).

Preferably, the first radially outer region of the wall follows, viewed in the radial section, a curve having a convexity radially towards the outside.

In the present description and in the attached claims, the expression "the wall follows a curve" is used in a broad sense so as to include local deviations from such a curve that are at most of the order of magnitude of the wall thickness.

A second radially outer region of the wall, coinciding with or contained within the first radially outer region, follows, viewed in the radial section, an arc of circumference, centered at a reference point.

The geometric circle, which such an arc of circumference is part of, is herein indicated as "reference circle", and its center is herein indicated as "center of the reference circle" or briefly "reference point". Considering the entire bicycle rim, instead of its radial section, it is possible to talk of a "reference toroid".

The second radially outer region is therefore internally delimited (in a radial direction) by an imaginary cylindrical surface with axis coinciding with the axis of rotation of the rim, having greater radius with respect to an imaginary cylindrical surface with axis coinciding with the axis of rotation of the rim, that internally delimits (in the radial direction) the first radially outer region.

More preferably, said arc of circumference has a radius of curvature equal to a radius of curvature of a tire of a size in accordance with a desired standard.

Outside of the scope of the present invention, the arc of circumference subtends an angle comprised in the range between 5° and 120°.

According to the invention, the arc of circumference subtends an angle comprised in the range between 90° and 115°, preferably equal to about 110°.

Preferably, the radial section of the rim at least partially follows an aerodynamically efficient profile, namely such as to oppose a minimum resistance to the air.

More preferably, the aerodynamically efficient profile is an NACA airfoil, preferably a symmetrical NACA airfoil, and said arc of circumference of the second radially outer region is an arc of the nose circle (osculating circle of the leading edge).

As known, an NACA airfoil is defined by the American National Advisory Committee for Aeronautics in parametric terms by specific equations.

In other words, the aforementioned reference circle is the nose circle of an NACA airfoil.

In embodiments, the wall has a textured outer surface, in particular rough, at least at a third radially outer region.

Such a surface advantageously increases the grip onto the road surface.

In alternative embodiments, said rim has, at least at a third radially outer region, a coating having greater rolling friction than the naked surface of the rim.

The coating also advantageously increases the grip onto the road surface.

Preferably, said third radially outer region can comprise said second radially outer region or, vice-versa, said second radially outer region can comprise the third radially outer region.

Preferably, the third radially outer region subtends an angle comprised in the range between 10° and 160°, more preferably between 90° and 150°, even more preferably equal to about 105°, having said reference point as a vertex.

Preferably, the coating has a comparatively high thickness in said third radially outer region, and extends further with a comparatively low thickness to overall cover a fourth radially outer region, wider than the third radially outer region.

Preferably, the fourth radially outer region subtends an angle comprised in the range between 20° and 270°, more preferably between 200° and 260°, even more preferably equal to about 210°, having said reference point as a vertex.

Preferably, the coating is formed of a single strip fixed onto the exposed face of the fourth radially outer region of the rim.

Alternatively, the coating comprises a plurality of strips fixed along the exposed face of the fourth radially outer region of the rim, separated from one another by uncoated rim portions.

Preferably, the coating is fixed onto the rim through gluing, so as to be able to provide for the removal thereof, ungluing it, for the purposes of repair or replacement.

Alternatively, the coating could be irremovably fixed onto the rim, for example through co-molding.

Preferably, the coating is made of rubber, for example tire compounds.

Yet alternatively, the coating can consist of rubber vulcanized directly onto the rim.

Preferably, an exposed face of the third radially outer region comprises a shaping configured to favour the gluing of the coating.

In such case, the shaping comprises at least one circumferential channel, and more preferably at least two circumferential channels, parallel to and spaced from one another.

Preferably, said at least one circumferential channel is not made astride of the median plane of the rim.

Alternatively or additionally, the shaping comprises a plurality of angularly spaced bulges.

In particularly preferred embodiments, the shaping comprises at least one circumferential channel, and a plurality of angularly spaced bulges on the bottom of said at least one circumferential channel.

Preferably, the radial section of the rim provided with the coating at least partially follows an aerodynamically efficient profile.

More preferably, the aerodynamically efficient profile is an NACA airfoil, preferably a symmetrical NACA airfoil, and said coating follows an arc of circumference that is an arc of the nose circle.

Preferably, the rim is at least partially made of composite material comprising structural fibers incorporated in a polymeric material, preferably thermosetting.

Typically, the structural fibers are selected from the group consisting of carbon fibers, glass fibers, boron fibers, synthetic fibers, ceramic fibers and combinations thereof.

Preferably, the synthetic fibers comprise polyoxazoline fibers, for example Zylon^{®}, ultra-high molecular weight polyethylene fibers, for example Dyneema^{®}, aramid fibers, for example Kevlar fibers, and combinations thereof.

Alternatively, the rim can be made of metallic material, preferably a light alloy, such as for example aluminum or alloys thereof.

In embodiments, the rim has two annular braking tracks on two lateral zones of the wall, respectively.

In the present description and in the attached claims, under "braking track", an annular region extending in a plane perpendicular to the axis of rotation is meant to be indicated, suitable for cooperating with a pad of a caliper-type brake.

Such a rim is suitable for use in a bicycle provided with a brake acting on the rim.

In other embodiments, the rim lacks braking tracks on the lateral zones of said wall.

Typically, the rim comprises a radially inner region configured for connection with a hub through a plurality of spokes, a plurality of spider legs and/or a pair of slightly conical discs.

In another aspect, the present invention relates to a bicycle wheel comprising a rim as stated above.

In embodiments, said wheel is equipped with a disc of a disc brake.

Alternatively, said wheel is configured for use of a caliper-type brake.

In embodiments, the wheel is a spoked wheel further comprising a hub and a plurality of structural spoke-type elements that connect the rim to the hub.

In other embodiments, the wheel is a lenticular or disc wheel further comprising a hub and a pair of disc-shaped elements that connect the rim to the hub, the disc-shaped elements playing the role of increasing the aerodynamic performance and/or playing a structural role.

Preferably, said lenticular or disc wheel at least partially follows, in an axial section, an aerodynamically efficient profile.

More preferably, the aerodynamically efficient profile of the lenticular or disc wheel follows, in a radially outer region, a symmetrical NACA airfoil.

In other embodiments, the wheel is a spider wheel further comprising a hub and a plurality of spider-type structural elements that connect the rim to the hub.

Preferably, each spider-type structural element follows, in a cross section of the spider-type structural element, an aerodynamically efficient profile.

More preferably, the aerodynamically efficient profile of each spider-type structural element is a symmetrical NACA airfoil.

Further features and advantages of the present invention will become clearer from the following detailed description of some preferred embodiments thereof, made with reference to the attached drawings. The different features illustrated and described with reference to the individual configurations can be combined with one another as desired. In the following description, for the illustration of the figures, identical or similar reference numerals are used to indicate constructive or functional elements with the same function or analogous function. In the drawings:
- FIG. 1 is a perspective view of a lenticular or disc wheel of a bicycle incorporating a rim according to the invention, with a portion removed so as to highlight two radial sections,
- FIG. 2 is an analogous view to that of FIG. 1, but related to a bicycle spoked wheel incorporating a rim according to the invention,
- FIGS. 3 and 4 are analogous views to that of FIG. 1, but related to bicycle spider wheels incorporating a rim according to the invention,
- FIG. 5 is a partial view of the rim of the invention, which highlights the geometry thereof,
- FIGs. 6-8 are similar views to that of FIG. 5, but related to prior art rims,
- FIG. 9 is a partial view of the rim of the invention, which highlights the geometry thereof,
- FIG. 10 is a partial perspective view of a rim according to a first embodiment of the invention,
- FIG. 11 is a partial perspective view of a rim according to a second embodiment of the invention,
- FIG. 12 is a partial perspective view of a rim in an extreme travel condition,
- FIG. 13 illustrates a partial perspective view of the rim of FIG. 11 with the coating removed,
- FIGs. 14-15 schematically illustrate aerodynamically efficient profiles overlaid to the section of the rim according to two embodiments of the invention,
- FIG. 16 is a perspective view of the spider wheel of FIG. 3 with an aerodynamically efficient profile highlighted,
- FIG. 17 is a side half-section view of the lenticular wheel of FIG. 1 with an aerodynamically efficient profile highlighted,
- FIG. 18 shows a partial perspective view of a bicycle wheel rim according to the invention, provided with braking tracks, and
- FIG. 19 shows a partial perspective view of a bicycle wheel rim according to the invention, lacking braking tracks.

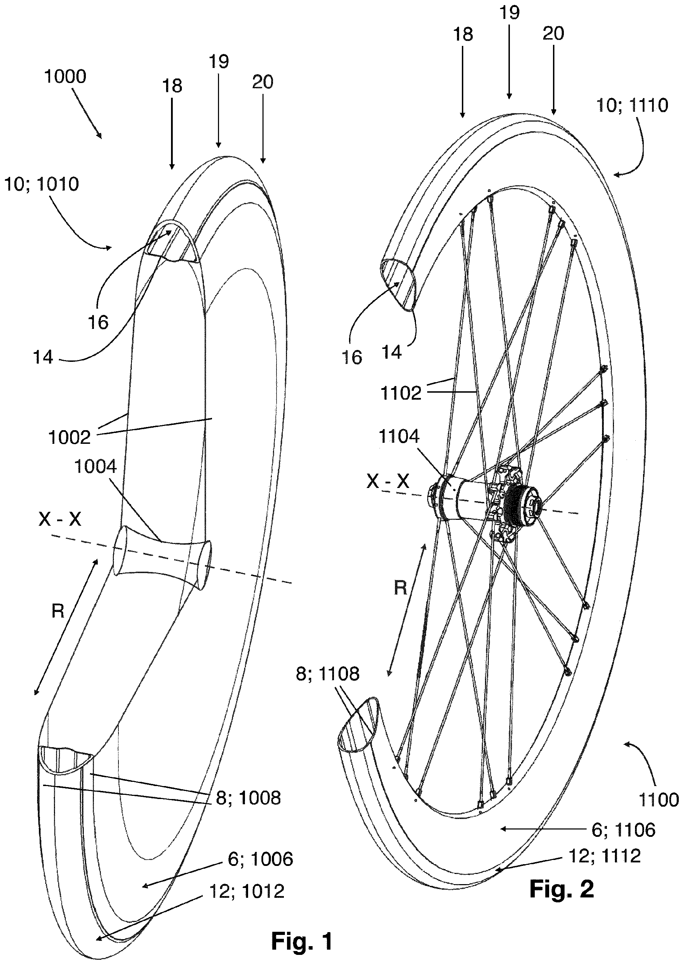

FIGs. 1-4 show various types of bicycle wheels 1000, 1100, 1200, 1300 comprising a respective rim 1010, 1110, 1210, 1310 according to the present invention.

The wheels 1000, 1100, 1200, 1300 shown can be rear or front bicycle wheels.

In particular, FIG. 1 shows a lenticular or disc wheel 1000 of a bicycle, wherein a pair of discs 1002, having a slightly frusto-conical shape according to the camber angle selected for the wheel, join the rim 1010 to a hub 1004 on each side of the wheel 1000.

FIG. 2 shows a spoked wheel 1100, wherein the rim 1110 is connected to the hub 1104 through a plurality of thin structural elements or spokes 1102 individually tensioned. The number, type and arrangement of the spokes 1102, as well as the way in which they are connected to the rim 1110 and to the hub 1104, may vary based on the type of spoking and the desired specific features of the wheel 1100.

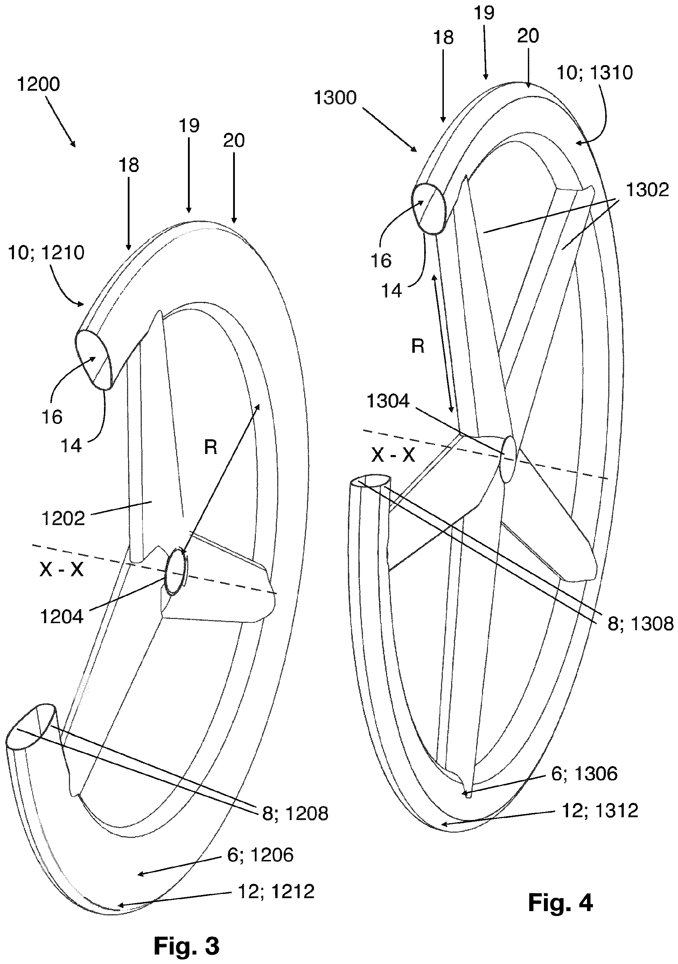

FIGs. 3-4 finally illustrate spider wheels 1200 and 1300, wherein a smaller number (for example, respectively three and five in the cases shown) of radial elements or spider legs, generically indicated with reference numeral 1202, 1302, join the rim 1210, 1310 to the hub 1204, 1304. Differently from the spokes 1102 of FIG. 2, the spider legs 1202, 1302 are not tensioned and in particular form a single body with the rim 1210, 1310 and/or with the hub 1204, 1304. The number, shape and arrangement of the spider legs 1202, 1302 can vary based on the type and desired use of the wheel 1200, 1300 - for example depending on whether it is a rear wheel or a front wheel -, based on the aerodynamic features that the wheel 1200, 1300 is wished to be provided with and/or based on other desired specific features of the wheel 1200, 1300.

The rims 1010, 1110, 1210, 1310 of the various wheels 1000, 1100, 1200, 1300 shown in FIGs. 1-4 differ from one another in terms of their radially inner region 1006, 1106, 1206, 1306, which is adapted to the different elements (discs 1002, spokes 1102, spider legs 1202, 1302) for connection to the hub 1004, 1104, 1204, 1304.

However, as will be clear for those skilled in the art, these distinctions are not relevant for the purposes of the present invention, which concerns the radially outer region 1012, 1112, 1212, 1312 of the rims 1010, 1110, 1210, 1310, for which reason in the rest of the present description reference will always be made - unless otherwise specified - to a generic rim, which will be identified with reference numeral 10; similarly, the radially outer region will be generically identified with reference numeral 12, and so on.

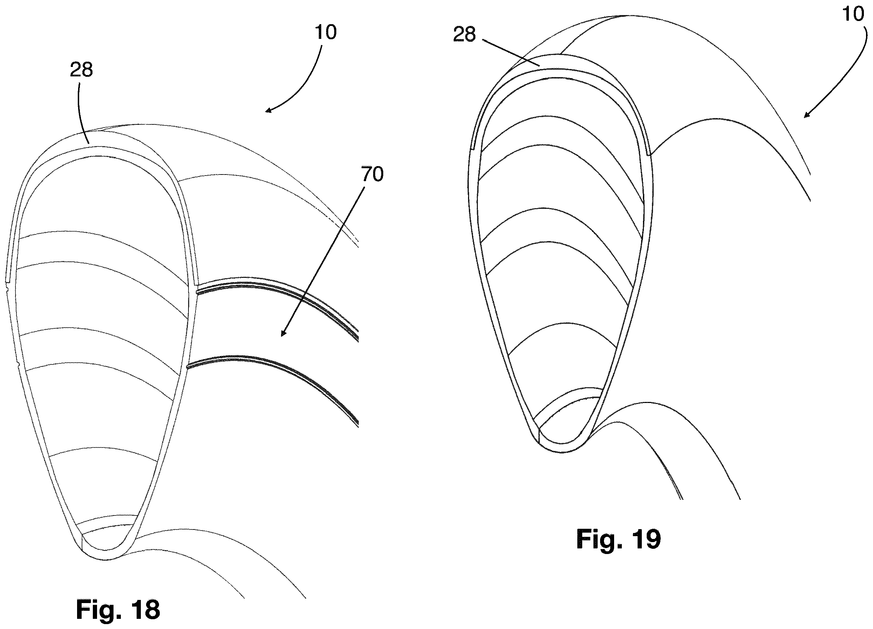

The rim 10 according to the invention can vary, in particular in the lateral zones or lateral walls 1008, 1108, 1208, 1308 - generically lateral walls 8 -, also depending on whether on the wheel 1000, 1100, 1200, 1300 on which the rim is mounted, a braking system is provided or not, and - in the presence of a braking system - depending on whether it is a brake acting on the rim itself or a disc brake or yet another type: in the case of a brake acting on the rim, the rim 10 typically comprises two braking tracks as defined above. For this purpose, reference should also be made to FIGs. 18-19 described hereinafter.

The rim 10 of the invention can also vary depending on whether on the wheel on which it is mounted, a cogset of a gearshift and/or a disc of a disc brake is provided, in which case its radially inner region 1006, 1106, 1206, 1306, or generically radially inner region 6, can be asymmetric, or not.

The wheels 1000, 1100, 1200, 1300 comprising the rim 10 of the invention can indeed be used in any type of bicycle, for example in a road bicycle or in a track racing bicycle. As known, on track racing bicycles typically no braking system nor gearshift is typically provided for, unlike on road bicycles.

Therefore, the rim 10 of the invention can be made in a variety of shapes in radial section - except, of course, as specified in the rest of the present description - wherein the radially inner region 6 is suitably designed according to the type of elements of connection of the rim 10 to the hub; the lateral walls 8 are suitably designed according, again, to the type of elements for connection of the rim 10 to the hub, the type of braking system provided for - presence or absence of braking tracks, and possibly to the presence or absence of a cogset and/or of a disc of a disc brake.

In each of FIGs. 1-4, a sector of the rim 10 is removed through two radial sections having different angles, namely two sections carried out through a respective half-plane having the axis of rotation X-X of the rim 10 (or axis of the hub 1004, 1104, 1204, 1304) as origin. Hereinafter and unless otherwise indicated reference will always be made to the rim 10 when observed in one of such radial sections, for example in the radial section which can be viewed at the top of FIGs. 1-4.

The rim 10 comprises, and more specifically is formed of, a wall 14 that extends along a closed line. The wall 14 defines a single inner chamber or annular cavity 16 concentric with the rim 10. It is moreover possible to provide, in addition, partition walls (not shown) for partitioning the inner space of the chamber 16, such as to define different sub-chambers of the rim 10.

The wall 14 of the rim is made of metallic material, preferably of a light alloy, such as for example aluminum or alloys thereof or - at least in part - of composite material comprising structural fibers incorporated in a thermosetting or thermoplastic polymeric material, preferably a material as better specified in the introductory part of the present description.

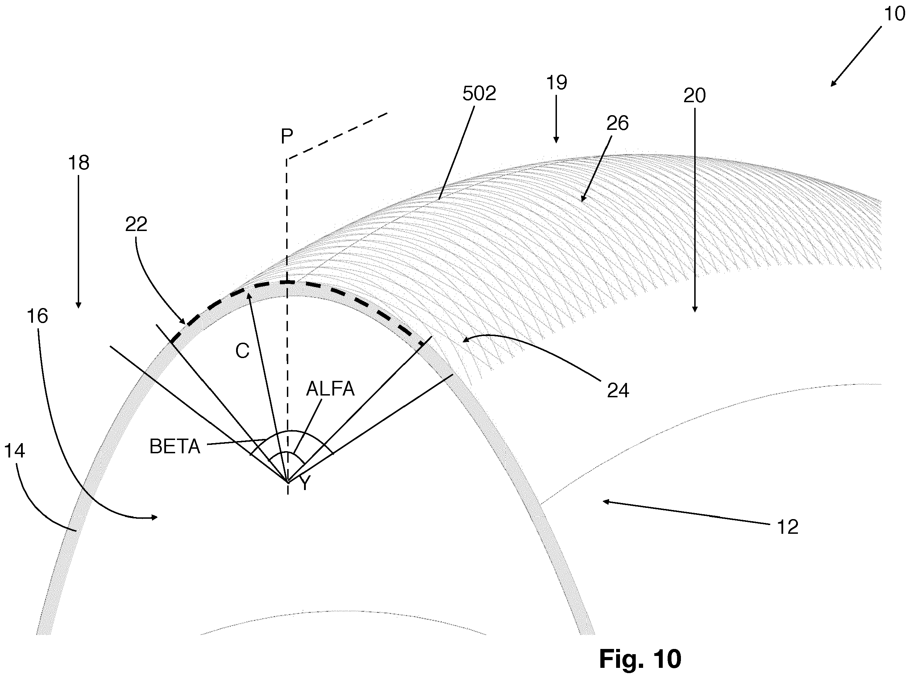

In FIGs. 1-4 and also in FIGs. 10-11 described hereinafter in detail, in which the radially outer region 12 of two embodiments of rim 10 of the invention is illustrated, it can immediately be noticed that the wall 14 and the rim 10 itself are substantially convex outwards, with reference to the radial direction R - to which, as already stated, the outward direction is always referred, unless otherwise indicated.

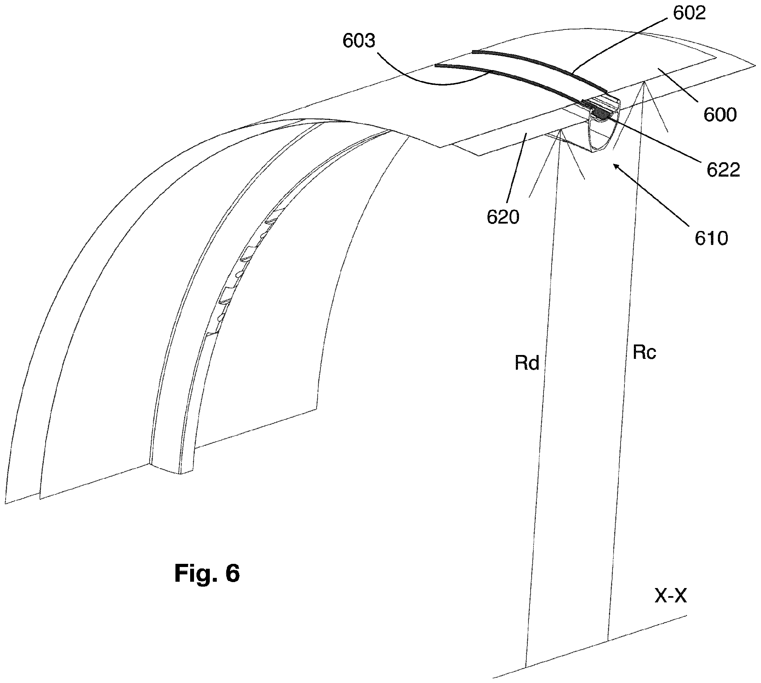

Indeed, in the rim 10 the two lateral zones 8 of the wall 14 of the rim 10 (or lateral walls 8) curve towards each other and, at the maximum distance from the axis of rotation X-X of the wheel 1000, 1100, 1200, 1300, join each other without forming any concave channel or any flat wall segment between them, differently from known rims (such as for example those in FIGs. 6-8 described hereinafter).

Furthermore, considering a partition of the rim 10 in three slices 18, 19, 20 of equal size along the axis of rotation X-X, in particular an axially central slice 19 and two axially outer slices 18, 20, the wall 14 projects radially outwards to a greater extent in its axially central slice 19 than in the axially outer slices 18, 20.

The imaginary partition of the rim 10 in the three slices 18, 19, 20 is done through four imaginary planes (they are not shown in the figures for the sake of clarity) perpendicular to the axis of rotation X-X and equidistant to each other, one of which is tangent to the rim 10 on one side thereof (for example on the left in FIG. 1), one is tangent to the rim on an opposite side thereof (for example on the right in FIG. 1), and two are intermediate between them.

This is in contrast with known rims of bicycle wheels, in which the wall of the rim, not necessarily closed, projects radially outwards to a greater extent in the axially outer slices - therein corresponding to the lateral surfaces of the rim and/or to the flanges for holding the pneumatic tire and/or solid tire - than in the axially central slice - therein corresponding to the bottom of the channel.

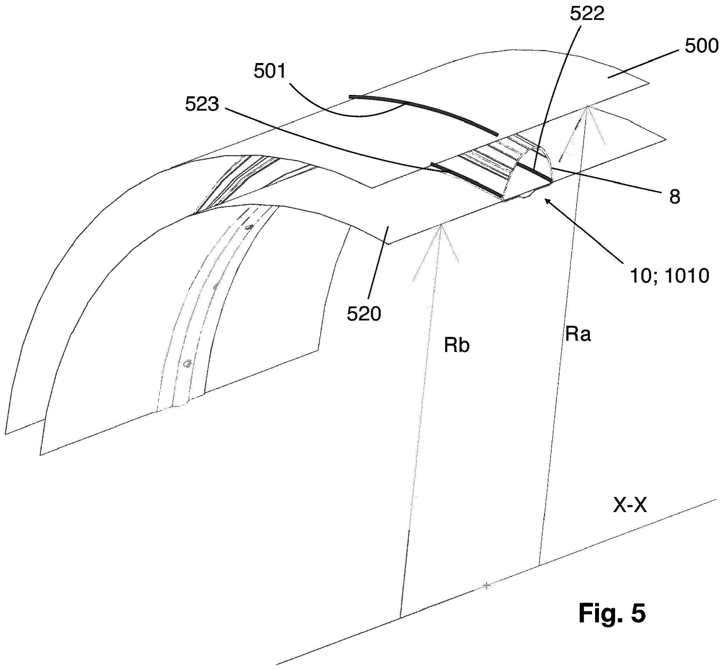

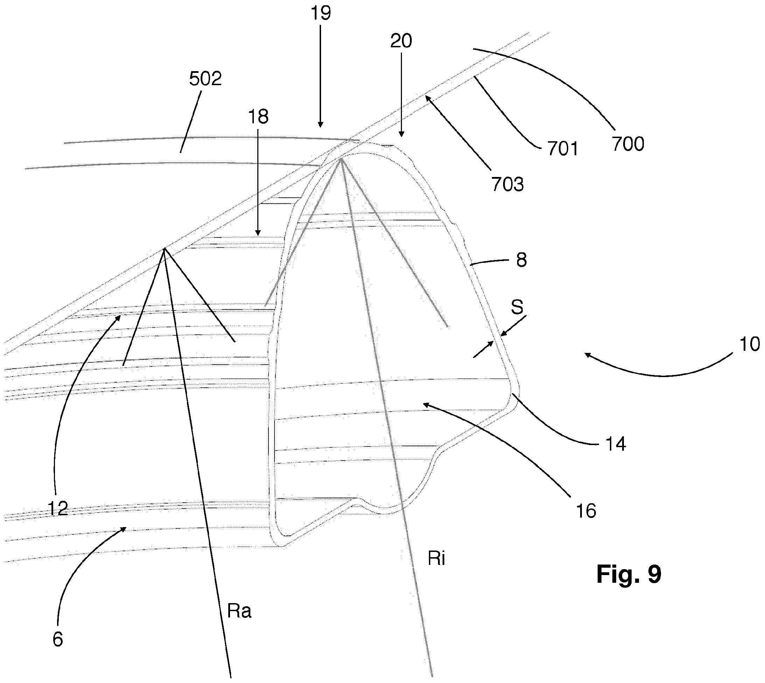

In order to better illustrate this particular feature of the rim of the invention, with reference to FIG. 5, let us consider an imaginary cylinder 500 coaxial with the rim 10 (which in this case is the rim 1010 of FIG. 1, by way of example) and tangent externally thereto, namely the cylinder 500 with minimum radius, indicated with Ra, capable of enclosing the entire rim 10, or enveloping cylinder 500. The enveloping cylinder 500 intersects the rim 10 according to one single circumference 501 or, in the more realistic case of section of the radially outer region 12 of the rim 10 not perfectly shaped as an arc of circumference - such as for example in case there are surface grooves - such enveloping cylinder 500 intersects the rim 10 according to two or more circumferences that are however comprised within one single thin cylindrical band 502, having a width comparable to the average thickness S of the wall 14 (cf. FIG. 9 described hereinafter).

A second imaginary cylinder 520, also coaxial with the rim 10, but internal to the enveloping cylinder 500, with radius Rb<Ra, intersects the rim 10 of the invention at the two lateral zones or walls 8, and therefore according to two spaced cylindrical bands 522, 523.

Vice-versa, as shown in FIGs. 6-8, in known rims such as for example the rim 610 of the clincher tire-type in FIG. 6, the enveloping cylinder 600 with radius Rc intersects the rim 610 according to two spaced cylindrical bands 602, 603 (or two circumferences, in an ideal case), indicated with deliberately exaggerated lines; it is only a second imaginary cylinder 620, also coaxial with the rim 610 but internal to the enveloping cylinder 600, with radius Rd<Rc, that intersects the known rim 610 at the bottom of the channel and therefore, alternatively or additionally, according to an axially central cylindrical band 622.

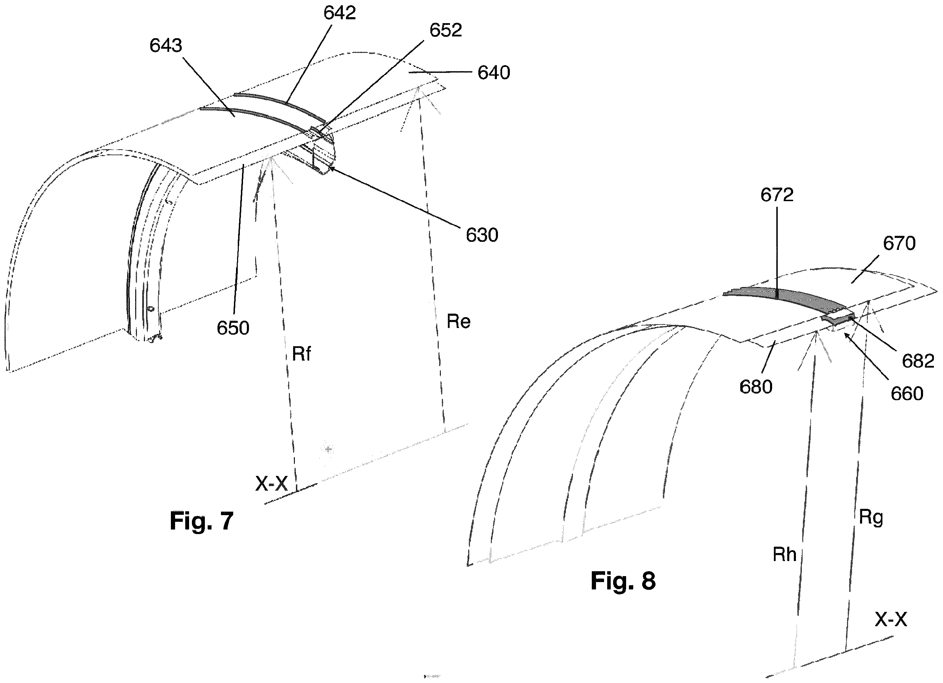

The same happens in the case of the known rim 630 of the type for a tubular tire shown in FIG. 7, which intersects the enveloping cylinder 640 with radius Re according to two cylindrical bands 642, 643, and the second cylinder 650 with radius Rf<Re according to a single band 652.

In the case of a rim 660 having solid rectangular (or squared) section, the enveloping cylinder 670 with radius Rg and all of the cylinders concentric therewith, for example the second cylinder 680 with radius Rh<Rg, intersect the rim according to a single cylindrical band 672, 682, as shown in FIG. 8.

The meaning of the thin cylindrical band 502 mentioned above with reference to FIG. 5 can be better understood with reference to FIG. 9.

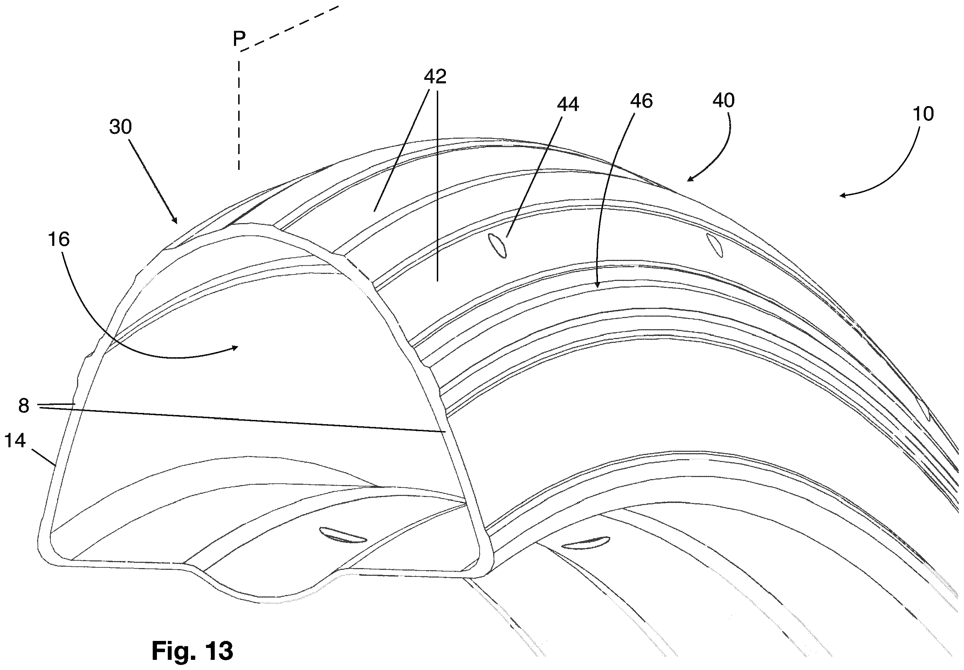

Let us consider two concentric cylinders 700, 701, one of which is the enveloping cylinder, namely the cylinder with minimum radius Ra, and the other one has a radius Ri only slightly smaller than it, the difference D = Ra-Ri between the two radii being roughly equal to the thickness S of the wall of the rim 10. The annular cylinder 703 comprised between the two concentric cylinders 700, 701 intersects the rim 10 of the invention according to the aforementioned thin cylindrical band 502. Considering the annular cylinder shown in FIG. 9 means neglecting undesired or deliberately formed surface roughness (in this respect, see FIG. 13 described in detail hereinafter).

FIG. 10 shows a perspective view of a portion of a rim 10, according to a first embodiment of the invention. In particular, only the radially outer region 12 thereof is shown, hereinafter called first radially outer region 12.

In an extremely advantageous manner, the rim 10 of the first embodiment, in the final use configuration, is naked, free of pneumatic tire / solid tire. As explained in the introductory part, the "hollow" structure obtained through the wall 14 closed on itself in a radial section provides *per se* the rim 10 with suitable elasticity; furthermore, the geometry of the radially outer region 12 of the wall 14, which as stated above is substantially convex outwards, allows the rim 10 to roll over the road surface along the axially central slice 19 (i.e., astride of the median plane P of the rim 10) when the axis of rotation X-X of the wheel (not visible in FIG. 10, shown in FIGs. 1-8) is substantially parallel to the road surface, the axially lateral slices 18, 20 of the wall 14 instead becoming involved in the rolling only when the axis of rotation of the wheel is tilted with respect to the road surface.

More in particular, thanks to the convexity of the rim 10, wherein the radially outer region 12 of the wall 14 follows a curve having the convexity radially outwards, the rolling in each travel condition takes place along a thin annular band (corresponding to the cylindrical band 502 in the condition in which the bicycle is vertical with respect to the ground) that, in an ideal condition of a perfectly flat road surface, absence of deformations of the rim, perfect convexity of the rim, etc., would be a circular line.

In order to best allow such rolling interaction on the road surface in a wide range of possible travel conditions, in a second radially outer region 22, highlighted with a broken line in FIG. 10, the wall 14 follows an arc of circumference having center in the point Y, and that subtends an angle ALFA.

The point Y of the rim, namely the center of curvature of the rim 10 at its median plane P, will be used as a reference for all of the angles indicated hereinafter, and sometimes called reference point Y.

The geometric circle having center Y and externally tangent to the rim 10, in a radial section, is the above-defined "reference circle".

The second region 22 of the rim 10 preferably extends less than the aforementioned first radially outer region 12, which is only generically convex, but not circular in section. Namely, the second radially outer region 22 is delimited by an imaginary cylindrical surface (not shown) with axis coinciding with the axis of rotation of the rim, having a greater radius than an imaginary cylindrical surface (roughly corresponding to the truncation of the rim 10 highlighted in FIG. 10) that delimits the first radially outer region 12.

Said second radially outer region 22 is therefore comprised within the first radially outer region 12, but in other embodiments it can coincide therewith.

Preferably, the arc of circumference followed by the second radially outer region 22 has a radius C (radius of curvature of the rim 10 at its median plane P) equal to a radius of curvature typical of a tire of a size in accordance with a desired standard.

In the case of racing bicycles, in which the diameter of a rather common standard tire is 23 mm, the radius of curvature C is preferably equal to 11.5 mm.

According to the invention, the angle ALFA is comprised in the range between 90° and 115°, preferably equal to about 110°.

The wall 14 of the rim 10 shown in FIG. 10, at least at a third radially outer region 24, has a surface roughness or textured outer surface 26, for example a knurling - namely it has a textured, in particular rough, outer surface.

Such a third radially outer region 24 extends so as to comprise at least said second radially outer region 22, and more preferably also the entire first radially outer region 12 - or, even, also more radially inner portions of the rim 10.

In alternative embodiments, the roughness 26 could extend less and/or could not necessarily extend in a continuous manner all around the axis of rotation X-X (not visible in FIG. 10, shown in FIGs. 1-8).

The roughness 26 advantageously increases the grip onto the road surface and can for example be made through sandblasting, diamond grinding machining, lasering processes, etc.

The third radially outer region 24 subtends an angle BETA with vertex in the reference point Y.

The angle BETA is preferably comprised in the range between 10° and 160°, more preferably between 90° and 150°, even more preferably equal to about 105°.

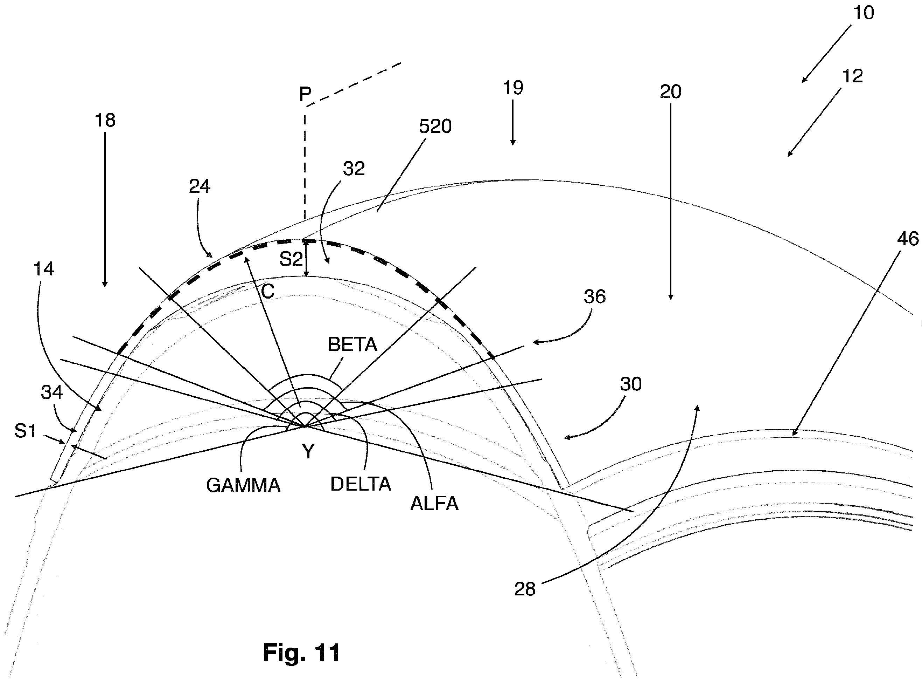

FIG. 11 shows another embodiment of a rim 10 according to the invention.

In this case, instead of the roughness 26 (FIG. 10), the rim 10 has a coating layer 28 with greater rolling friction than the naked surface of the rim 10, which advantageously increases the grip of the wheel onto the road surface.

The coating layer 28, briefly coating 28, is a substantially two-dimensional material that coats the wall 14 of the rim, without substantially altering the shape thereof.

For example, it can be a rubber such as a tire compound.

The coating 28 extends at least in a radially outer region that is still indicated as third radially outer region 24, and for which what has been stated with reference to FIG. 8, in terms of geometric shape and angular extension (angle BETA discussed above), holds true.

In the case shown, the third radially outer region 24 extends less than the second radially outer region 22, but, alternatively, what has been stated above with reference to FIG. 10 could hold true.

Preferably, as shown, the coating 28 extends further until it overall extends in a fourth radially outer region 30. The third radially outer region 24 is preferably axially central with respect to the fourth radially outer region 30 corresponding to the total extension of the coating 28.

The fourth radially outer region 30 overall involved by the coating 28 subtends an angle GAMMA with vertex in the reference point Y.

The angle GAMMA is preferably comprised in the range between 20° and 270°, more preferably between 200° and 260°, even more preferably equal to about 210°.

The coating 28 preferably has a comparatively high thickness in a central region 32 thereof, and a comparatively low thickness at its lateral edges 34, the minimum and maximum thicknesses being respectively indicated with S1 and S2.

The thickness of the coating 28 preferably changes smoothly in two transition zones 36.

In the mounted condition, the central region 32 of the coating 28, with a thickness that becomes maximum at the value S2, covers the third radially outer region 24 of the rim 10, the coating 28 overall covers the fourth radially outer region 30, and the transition zones 36 extend to cover two regions comprised between the aforementioned angle BETA and an angle DELTA, again with vertex in the reference point Y.

Preferably, the coating 28 consists of a strip - or of different pieces of strip - of sufficiently flexible and elastic material fixed to the rim 10 preferably through gluing, as better described hereinafter.

The total width of the strip corresponds to the angle GAMMA, the width of the central region 32 corresponds to the angle BETA, and the width of each transition zone 36 of the coating 28 corresponds to an angular value equal to half of the angle DELTA-BETA.

In the preferred case of a reference circle of diameter of 23 mm, the total width of the strip is about 28 mm.

Alternatively, the coating 28 can be formed by vulcanizing a rubber vulcanized directly onto the rim 10.

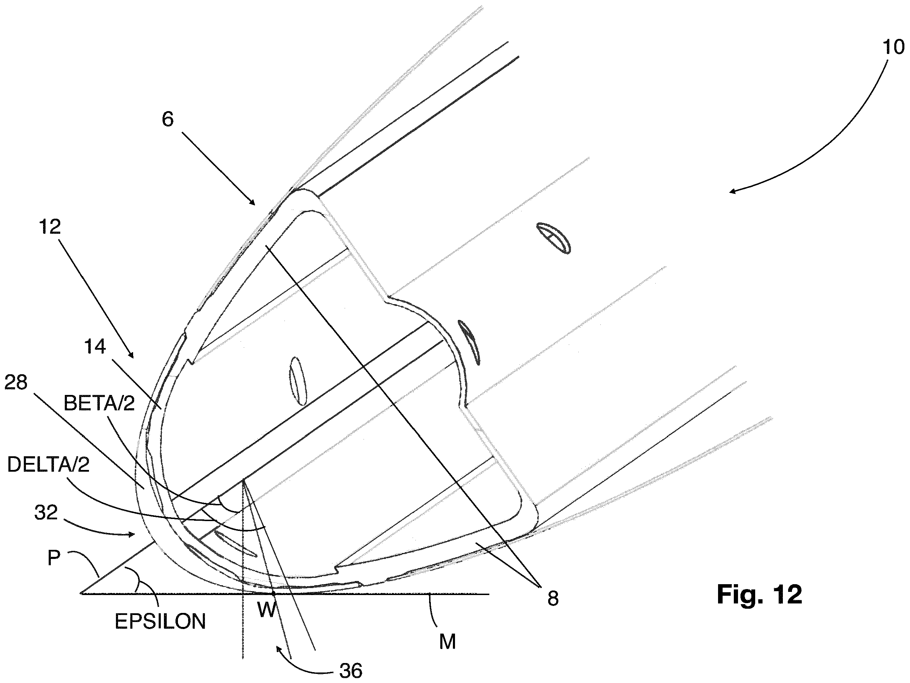

With reference to FIG. 12, the criteria on which to select the values of the various angles, and in particular of the angles BETA and DELTA, are better explained. In FIG. 12, the rim is illustrated in a travel condition in which the axis of rotation greatly differs from the condition of being parallel with the road surface M. In the case shown, the angle between the median plane P of the rim 10 and the plane of the road surface M is indicated as EPSILON. The contact point W between the rim 10 and the road surface M is located in the region comprised between the angle BETA and the angle DELTA (in FIG. 12 the halves of these angles are marked), corresponding to the transition zone 36 in which the thickness of the coating 28 has not yet dropped to the minimum value. Therefore, even at such a high inclination, the rim 10 still has a good grip onto the road surface. At less pronounced inclinations, the contact point W moves towards the median plane P (leftwards in FIG. 12), in the central region 32 of the coating corresponding to the angle BETA.

For example, the values BETA = 110° = 2*55° and DELTA= 140° = 2*70° allow an inclination corresponding to an angle EPSILON = 35°, which already represents a remarkable safety margin, given that already at an inclination corresponding to an angle EPSILON = 45°, the risk of falling of the cyclist is high.

FIG. 13 illustrates that, in the case of glued coating 28 (not shown here), the exposed face of the fourth radially outer region 30 of the rim 10 has a shaping 40 configured to favour the gluing of the coating 28.

Merely as an example, in the embodiment shown in FIG. 13, the shaping 40 of the radially outer region 12 comprises four grooves or circumferential channels 42 extending circumferentially, parallel to and spaced from one another. It should be understood that it is possible to provide for a greater or lower number of circumferential channels, even only one.

The circumferential channels 42 serve the scope of retaining the glue that is interposed between the exposed face of the rim and the non-exposed face of the coating.

Preferably, as shown, no circumferential channel 42 is made astride of the median plane P of the rim 10.

Preferably, as shown, the shaping 40 also comprises a plurality of bulges 44, shown in the form of a spherical cap merely as an example. The bulges 44 are angularly spaced along the circumferential direction of the rim 10.

Preferably, as shown, the bulges 44 are formed on the bottom of some of the circumferential channels 42.

It should be understood that various different configurations of the shaping 40 are possible.

As shown again in FIG. 13 and in FIG. 11, each lateral wall 8 of the rim 10 may have a step 46 "rising" outwards - in a generically axial direction - from the edge of the coating 28, where provided for, so that the coating 28 is flush with the lateral wall 8 and is less easily subject to accidental detachment.

In case of coating 28 glued onto the rim, it is however possible to provide for the removal thereof, ungluing it, for the purposes of repair or replacement.

Alternatively, the coating 28 could be irremovably fixed on the rim, for example through co-molding.

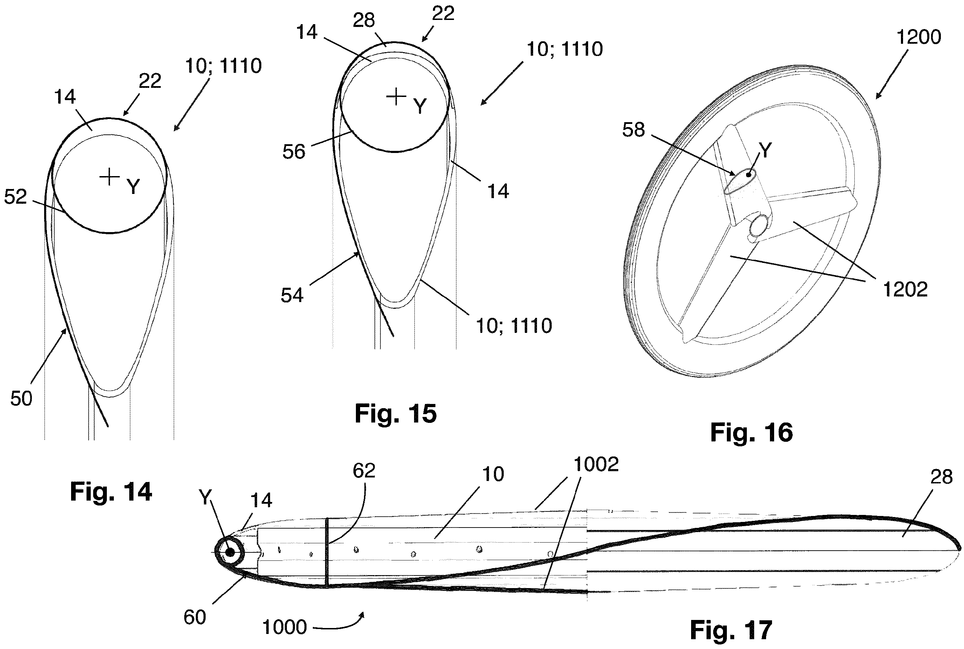

As highlighted by FIGs. 14-16, in preferred embodiments the wall 14 of the rim 10 at least partially follows an aerodynamically efficient profile, namely such as to oppose a minimum resistance to air.

More preferably, the aerodynamically efficient profile is a symmetrical NACA airfoil 50 (FIG. 14), wherein the aforementioned reference circle having center in the reference point Y is the nose circle 52 - so that the aforementioned arc of circumference of the second radially outer region 22 is an arc of the nose circle.

In detail, FIG. 14 represents the rim 10, 1110 according to the embodiment of FIG. 10, wherein the wall 14 is naked; the rim 10, 1110 is shown for a wheel of the spoked type 1100, but FIG. 14 is essentially representative of the rim in the case of a spider wheel 1200, 1300 - of course the section being taken in rim segments far from the spider legs 1302.

FIG. 15 represents the rim 10, 1110 - also in this case of a spoked wheel 1100, but also representative of a spider wheel 1200, 1300 - according to the embodiment of FIG. 10, provided with the coating 28. In this latter case, preferably the coating 28 is taken into account in the calculation of the NACA profile 54 - which thus represents the profile of the rim already coated; however, it should be understood that in practice it is possible (if not actually preferable) to neglect the coating 28 in the calculation of the profile of the rim 10, so that the NACA profile 54, with its nose circle 56, would represent the profile of the underlying wall 24 in an similar manner to FIG. 14.

FIG. 16 represents the spider wheel 1200, on which it is highlighted that also the section of each spider leg 1202 follows, in each cross section of the spider leg 1202 itself, an aerodynamically efficient profile, and preferably a NACA profile 58.

FIG. 17 represents the rim 10, 1010 - in this case, provided with the coating 28 in accordance with the embodiment of FIG. 11 - mounted in a lenticular or disc wheel 1000.

In this case, advantageously the radially outer region of the disc-shaped elements 1002 (to the left of the vertical line indicated with 62) follows a part of the same aerodynamic profile 60, preferably of the NACA type, followed by the part of wall 14 of the rim not coated by the disc-shaped elements 1002. Namely, a part of the NACA profile 60 is formed by the rim 10, 1010 with the mounted disc-shaped elements 1002; in the immediately adjacent region, the disc-shaped elements 1002 preferably have a section that is locally tangent to the NACA profile 60.

It should be observed that the rim 10 of the invention, with or without the coating 28, overall performs a function similar to that of a conventional clincher, with or without inner tube. The geometry of the coated rim thus made is indeed devised to mirror, at the second radially outer region 22 of the rim, the shape of a conventional inflated clincher.

In particular, the axially central region 32 of the coating 28, with comparatively high thickness, corresponds to that which is defined the "active zone" or "tread" of a conventional clincher, namely the zone that contacts the travel terrain and ensures that the wheel adheres to the travel terrain, therefore turning out to be the most stressed zone. The greater thickness of the coating 28 therefore has a reinforcing function and a, though minimal, damping function.

The wall 14 of the rim 10 can have variable thickness, depending on the mechanical stresses expected in the various zones thereof.

FIGs. 18 and 19 finally highlight that the rim 10 of the invention - shown provided with the coating 28 merely by way of an example - can be provided with braking tracks 70 (FIG. 18) or can lack them (FIG. 19).

Although the various radially outer regions 12, 22, 24, 30 have been shown always centered with respect to the median plane P of the rim 10, this is not strictly necessary.

## Claims

1. Rim (10; 1010; 1110; 1210; 1310) of a bicycle wheel (1000; 1100; 1200; 1300) comprising a wall (14) that, viewed in a radial section, extends along a closed line enclosing at least one annular cavity (16) concentric with the rim (10; 1010; 1110; 1210; 1310), and wherein, considering a partition of the rim (10; 1010; 1110; 1210; 1310) in three slices (18, 19, 20) of equal size along the axis of rotation (X-X), said wall (14) projects radially outwards to a greater extent in the axially central slice (19) than in the axially outer slices (18, 20), and wherein a first radially outer region (12) of the wall (14) is overall radially convex outwards,
wherein the rim (10; 1010; 1110; 1210; 1310) itself is convex radially outwards,
**characterized in that**
a second radially outer region (22) of the wall (14), coinciding with or contained within the first radially outer region (12), follows, viewed in the radial section, an arc of circumference that is part of a reference circle centered at a reference point (Y), wherein said arc of circumference subtends an angle (ALFA) comprised in the range between 90° and 115°.

2. Rim (10; 1010; 1110; 1210; 1310) according to claim 1, wherein the first radially outer region (12) of the wall (14) follows, viewed in a radial section, a curve having a convexity radially outwards the outside.

3. Rim (10; 1010; 1110; 1210; 1310) according to claim 1 or 2, wherein the angle (ALFA) is equal to about 110°.

4. Rim (10; 1010; 1110; 1210; 1310) according to any of the previous claims, wherein the radial section of the rim (10, 1010, 1110, 1210, 1310) at least partially follows an aerodynamically efficient profile (50, 54, 60), preferably an NACA airfoil, more preferably a symmetrical NACA airfoil, and wherein said arc of circumference of the second radially outer region (22) is an arc of the nose circle (52).

5. Rim (10; 1010; 1110; 1210; 1310) according to any of the previous claims, wherein the wall (14) has a textured outer surface (26), in particular rough, at least at a third radially outer region (24).

6. Rim (10; 1010; 1110; 1210; 1310) according to any of claims 1-4, wherein said rim (10, 1010, 1110, 1210, 1310), at least at a third radially outer region (24), has a coating (28) with greater rolling friction than the naked surface of the rim (10, 1010, 1110, 1210, 1310).

7. Rim (10; 1010; 1110; 1210; 1310) according to claim 5 or claim 6, wherein the third radially outer region (24) subtends an angle (BETA) comprised in the range between 10° and 160°, more preferably between 90° and 150°, even more preferably equal to about 105°, having said reference point (Y) as a vertex.

8. Rim (10; 1010; 1110; 1210; 1310) according to claim 6 or claim 7 when depending on claim 6, wherein the coating (28) has a thickness (S) that is comparatively high (S2) in said third radially outer region (24), and extends further with a thickness (S) that is comparatively low (S1) to overall cover a fourth radially outer region (30), wider than the third radially outer region (24).

9. Rim (10; 1010; 1110; 1210; 1310) according to claim 8, wherein the fourth radially outer region (30) subtends an angle (GAMMA) comprised in the range between 20° and 270°, more preferably between 200° and 260°, even more preferably equal to about 210°, having said reference point (Y) as a vertex, wherein preferably the coating (28) consists of a single strip fixed onto the exposed face of the fourth radially outer region (30) of the rim (10, 1010, 1110, 1210, 1310).

10. Rim (10; 1010; 1110; 1210; 1310) according to any of claims 6 or 7-9 when depending on claim 6, wherein the coating (28) is fixed onto the rim (10, 1010, 1110, 1210, 1310) through gluing.

11. Rim (10; 1010; 1110; 1210; 1310) according to any of claims 6 or 7-10 when depending on claim 6, wherein an exposed face of the third radially outer region (24) comprises a shaping (40) configured to favour the gluing of the coating (28), said shaping (40) comprising at least one circumferential channel (42), and more preferably at least two circumferential channels (42), parallel to and spaced from one another.

12. Rim (10; 1010; 1110; 1210; 1310) according to any of claims 6 or 7-11 when depending on claim 6, wherein the radial section of the rim (10, 1010, 1110, 1210, 1310) provided with the coating (28) at least partially follows an aerodynamically efficient profile (54, 60), preferably the aerodynamically efficient profile (54, 60) is an NACA airfoil, preferably a symmetrical NACA airfoil, and wherein said coating (28) follows an arc of circumference that is an arc of the nose circle (56).

13. Bicycle wheel (1000, 1100, 1200, 1300) comprising a rim (10, 1010, 1110, 1210, 1310) according to any of the previous claims.

14. Bicycle wheel (1000) according to claim 13, wherein said wheel is of the lenticular or disc type, further comprising a hub (1004) and a pair of disc-shaped elements (1002) that connect the rim (1010) to the hub (1004), wherein said wheel (1000) at least partially follows, in an axial section, an aerodynamically efficient profile, wherein the aerodynamically efficient profile of the lenticular or disc wheel (1000) follows, in a radially outer region, a symmetrical NACA airfoil (60).

15. Bicycle wheel (1200, 1300) according to claim 13, wherein said wheel is of the spider type, further comprising a hub (1204, 1304) and a plurality of spider-type structural elements (1202, 1302) that connect the rim (1210, 1310) to the hub (1204, 1304), wherein each spider-type structural element (1202, 1302) follows, in a cross section of the spider-type structural element (1202, 1302), an aerodynamically efficient profile that is a symmetrical NACA airfoil (58).

## Patentansprüche

1. Felge (10; 1010; 1110; 1210; 1310), eines Fahrradrads (1000; 1100; 1200; 1300), die eine Wand (14) aufweist, die sich, in einem radialen Schnitt betrachtet, entlang einer geschlossenen Linie erstreckt, die wenigstens einen ringförmigen und zu der Felge (10; 1010; 1110; 1210; 1310) konzentrischen Hohlraum (16) einschließt, wobei, wenn man die Felge (10; 1010; 1110; 1210; 1310) als in drei Abschnitte (18, 19, 20) gleicher Größe entlang der Drehachse (X-X) unterteilt betrachtet, die Wand (14) in dem axial mittleren Abschnitt (19) weiter radial nach außen vorsteht als in den axial äußeren Abschnitten (18, 20), und wobei ein erster radial äußerer Bereich (12) der Wand (14) insgesamt radial konvex nach außen ist,
wobei die Felge (10; 1010; 1110; 1210; 1310) selbst radial konvex nach außen ist,
**dadurch gekennzeichnet, dass**:
ein zweiter radial äußerer Bereich (22) der Wand (14), der mit dem ersten radial äußeren Bereich (12) zusammenfällt oder in diesem enthalten ist, in dem radialen Schnitt betrachtet, einem Umfangsbogen folgt, der Teil eines an einem Referenzpunkt (Y) zentrierten Referenzkreises ist, wobei der Umfangsbogen einen Winkel (ALFA) im Bereich zwischen 90° und 115° schneidet.

2. Felge (10; 1010; 1110; 1210; 1310) nach Anspruch 1, wobei der erste radial äußere Bereich (12) der Wand (14), in einem radialen Schnitt betrachtet, einer Kurve mit einer Konvexität radial nach außen folgt.

3. Felge (10; 1010; 1110; 1210; 1310) nach Anspruch 1 oder 2, wobei der Winkel (ALFA) gleich ungefähr 110° ist.

4. Felge (10; 1010; 1110; 1210; 1310) nach einem der vorstehenden Ansprüche, wobei der radiale Schnitt der Felge (10, 1010, 1110, 1210, 1310) wenigstens teilweise einem aerodynamisch effizienten Profil (50, 54, 60) und vorzugsweise einem NACA-Profil folgt und wobei der Umfangsbogen des zweiten radial äußeren Bereichs (22) ein Bogen des Nasenkreises (52) ist.

5. Felge (10; 1010; 1110; 1210; 1310) nach einem der vorstehenden Ansprüche, wobei die Wand (14) eine texturierte und insbesondere raue Außenfläche (26) wenigstens in einem dritten radial äußeren Bereich (24) aufweist.

6. Felge (10; 1010; 1110; 1210; 1310) nach einem der vorstehenden Ansprüche 1 bis 4, wobei die Felge (10,1010, 1110, 1210, 1310) wenigstens in einem dritten radial äußeren Bereich (24) eine Beschichtung (28) mit einer größeren Rollreibung als die nackte Oberfläche der Felge (10, 1010, 1110, 1210, 1310) aufweist.

7. Felge (10; 1010; 1110; 1210; 1310) nach Anspruch 5 oder 6, wobei der dritte radial äu-ßere Bereich (24) einen Winkel (BETA) im Bereich zwischen 10° und 160°, vorzugsweise zwischen 90° und 150° und noch besser gleich ungefähr 105° mit dem Referenzpunkt (Y) als einem Scheitel schneidet.

8. Felge (10; 1010; 1110; 1210; 1310) nach Anspruch 6 oder 7, wenn dieser von Anspruch 6 abhängt, wobei die Beschichtung (28) eine Dicke (S), die in dem dritten radial äußeren Bereich (24) relativ hoch (S2) ist, aufweist und sich weiterhin mit einer Dicke (S), die relativ niedrig (S1) ist, erstreckt, um einen vierten radial äußeren Bereich (30), der breiter als der dritte radial äußere Bereich (24) ist, insgesamt zu bedecken.

9. Felge (10; 1010; 1110; 1210; 1310) nach Anspruch 8, wobei der vierte radial äußere Bereich (30) einen Winkel (GAMMA) im Bereich zwischen 20° und 270°, vorzugsweise zwischen 200° und 260° und noch besser gleich ungefähr 210° mit dem Referenzpunkt (Y) als einem Scheitel schneidet, wobei die Beschichtung (28) vorzugsweise aus einem einzelnen Streifen besteht, der an der freiliegenden Fläche des vierten radial äußeren Bereichs (30) der Felge (10, 1010, 1110, 1210, 1310) fixiert ist.

10. Felge (10; 1010; 1110; 1210; 1310) nach einem der Ansprüche 6 oder 7 bis 9, wenn diese von Anspruch 6 abhängen, wobei die Beschichtung (28) an der Felge (10, 1010, 1110, 1210, 1310) durch Kleben fixiert wird.

11. Felge (10; 1010; 1110; 1210; 1310) nach einem der Ansprüche 6 oder 7 bis 10, wenn diese von Anspruch 6 abhängen, wobei eine freiliegende Fläche des dritten radial äußeren Bereichs (24) eine Form (40) aufweist, die derart konfiguriert ist, dass sie das Kleben der Beschichtung (28) unterstützt, wobei die Form (40) wenigstens einen Umfangskanal (42) und vorzugsweise wenigstens zwei Umfangskanäle (42), die parallel zueinander und voneinander beabstandet sind, umfasst.

12. Felge (10; 1010; 1110; 1210; 1310) nach einem der Ansprüche 6 oder 7 bis 11, wenn diese von Anspruch 6 abhängen, wobei der mit der Beschichtung (28) versehene radiale Schnitt der Felge (10, 1010, 1110, 1210, 1310) wenigstens teilweise einem aerodynamisch effizienten Profil (54, 60) folgt, wobei das aerodynamisch effiziente Profil (54, 60) vorzugsweise ein NACA-Profil und vorzugsweise ein symmetrisches NACA-Profil ist und wobei die Beschichtung (28) einem Umfangsbogen, der ein Bogen des Nasenkreises (56) ist, folgt.

13. Fahrradrad (1000, 1100, 1200, 1300), das eine Felge (10, 1010, 1110, 1210, 1310) gemäß einem der vorstehenden Ansprüche umfasst.

14. Fahrradrad (1000) nach Anspruch 13, wobei das Rad von einem linsen- oder scheibenförmigen Typ ist und weiterhin eine Nabe (1004) und ein Paar von scheibenförmigen Elementen (1002), die die Felge (1010) mit der Nabe (1004) verbinden, umfasst, wobei das Rad (1000) wenigstens teilweise, in einem axialen Schnitt, einem aerodynamisch effizienten Profil folgt, wobei das aerodynamisch effiziente Profil des linsen- oder scheibenförmigen Rads (1000) in einem radial äußeren Bereich einem symmetrischen NACA-Profil (60) folgt.

15. Fahrradrad (1200, 1300) nach Anspruch 13, wobei das Rad vom Spinnenspeichentyp ist und weiterhin eine Nabe (1204, 1304) und eine Vielzahl von Strukturelementen (1202, 1302) des Spinnenspeichentyps, die die Felge (1210, 1310) mit der Nabe (1204, 1304) verbinden, umfasst, wobei jedes Strukturelement (1202, 1302) des Spinnenspeichentyps in einem Querschnitt des Strukturelements (1202, 1302) des Spinnenspeichentyps einem aerodynamisch effizienten Profil, das ein symmetrisches NACA-Profil (58) ist, folgt.

## Revendications

1. Jante (10 ; 1010 ; 1110 ; 1210 ; 1310) d'une roue de bicyclette (1000 ; 1100 ; 1200 ; 1300) comprenant une paroi (14) qui, tel que vu selon une section radiale, est étendue le long d'une ligne fermée qui renferme au moins une cavité annulaire (16) qui est concentrique à la jante (10 ; 1010 ; 1110 ; 1210 ; 1310), et dans laquelle, si l'on considère une partition de la jante (10 ; 1010 ; 1110 ; 1210 ; 1310) selon trois tranches (18, 19, 20) de dimension égale le long de l'axe de rotation (X-X), ladite paroi (14) fait saillie radialement vers l'extérieur selon une étendue plus importante au niveau de la tranche axialement centrale (19) qu'au niveau des tranches axialement externes (18, 20), et dans laquelle une première région radialement externe (12) de la paroi (14) est globalement radialement convexe vers l'extérieur ;
dans laquelle la jante (10 ; 1010 ; 1110 ; 1210 ; 1310) elle-même est radialement convexe vers l'extérieur ;
**caractérisée en ce que** :
une deuxième région radialement externe (22) de la paroi (14), qui coïncide avec la première région radialement externe (12) ou qui est contenue à l'intérieur de cette même première région radialement externe, suit, tel que vu selon la section radiale, un arc de circonférence qui est une partie d'un cercle de référence qui est centré au niveau d'un point de référence (Y), dans laquelle ledit arc de circonférence sous-tend un angle (ALFA) qui est compris dans la plage entre 90° et 115°.

2. Jante (10 ; 1010 ; 1110 ; 1210 ; 1310) selon la revendication 1, dans laquelle la première région radialement externe (12) de la paroi (14) suit, tel que vu selon une section radiale, une courbe qui présente une convexité orientée radialement vers l'extérieur.

3. Jante (10 ; 1010 ; 1110 ; 1210 ; 1310) selon la revendication 1 ou 2, dans laquelle l'angle (ALFA) est égal à environ 110°.

4. Jante (10 ; 1010 ; 1110 ; 1210 ; 1310) selon l'une quelconque des revendications précédentes, dans laquelle la section radiale de la jante (10 ; 1010 ; 1110 ; 1210 ; 1310) suit au moins partiellement un profil efficient du point de vue aérodynamique (50, 54, 60), de préférence un profil aérodynamique NACA (National Advisory Committee for Aeronautics/Comité consultatif national pour l'aéronautique - USA), de façon davantage préférable, un profil aérodynamique NACA symétrique, et dans laquelle ledit arc de circonférence de la deuxième région radialement externe (22) est un arc du cercle en position antérieure (52).

5. Jante (10 ; 1010 ; 1110 ; 1210 ; 1310) selon l'une quelconque des revendications précédentes, dans laquelle la paroi (14) comporte une surface externe texturée (26), en particulier rugueuse, au moins au niveau d'une troisième région radialement externe (24).

6. Jante (10 ; 1010 ; 1110 ; 1210 ; 1310) selon l'une quelconque des revendications 1 à 4, dans laquelle ladite jante (10 ; 1010 ; 1110 ; 1210 ; 1310), au moins au niveau d'une troisième région radialement externe (24), comporte un revêtement (28) qui présente un frottement par roulement plus important que celui de la surface à nu de la jante (10 ; 1010 ; 1110 ; 1210 ; 1310).

7. Jante (10 ; 1010 ; 1110 ; 1210 ; 1310) selon la revendication 5 ou la revendication 6, dans laquelle la troisième région radialement externe (24) sous-tend un angle (BETA) qui est compris dans la plage entre 10° et 160°, de façon davantage préférable, dans la plage entre 90° et 150°, de façon encore plus préférable, un angle qui est égal à environ 105°, lequel angle comporte ledit point de référence (Y) en tant que sommet.

8. Jante (10 ; 1010 ; 1110 ; 1210 ; 1310) selon la revendication 6 ou la revendication 7 lorsqu'elle dépend de la revendication 6, dans laquelle le revêtement (28) présente une épaisseur (S) qui est comparativement élevée (S2) au niveau de ladite troisième région radialement externe (24), et il est étendu en outre selon une épaisseur (S) qui est comparativement faible (S1) pour recouvrir en totalité une quatrième région radialement externe (30) qui est plus large que la troisième région radialement externe (24).

9. Jante (10 ; 1010 ; 1110 ; 1210 ; 1310) selon la revendication 8, dans laquelle la quatrième région radialement externe (30) sous-tend un angle (GAMMA) qui est compris dans la plage entre 20° et 270°, de façon davantage préférable, dans la plage entre 200° et 260°, de façon encore plus préférable, un angle qui est égal à environ 210°, lequel angle comporte ledit point de référence (Y) en tant que sommet, dans laquelle, de préférence, le revêtement (28) est constitué par une unique bande qui est fixée sur la face exposée de la quatrième région radialement externe (30) de la jante (10 ; 1010; 1110; 1210; 1310).

10. Jante (10 ; 1010 ; 1110 ; 1210 ; 1310) selon l'une quelconque des revendications 6 ou 7 à 9 lorsqu'elle dépend de la revendication 6, dans laquelle le revêtement (28) est fixé sur la jante (10 ; 1010 ; 1110 ; 1210 ; 1310) par l'intermédiaire d'un collage.

11. Jante (10 ; 1010 ; 1110 ; 1210 ; 1310) selon l'une quelconque des revendications 6 ou 7 à 10 lorsqu'elle dépend de la revendication 6, dans laquelle une face exposée de la troisième région radialement externe (24) comprend une conformation (40) qui est configurée pour favoriser le collage du revêtement (28), ladite conformation (40) comprenant au moins un canal circonférentiel (42) et de façon davantage préférable, au moins deux canaux circonférentiels (42) qui sont parallèles l'un à l'autre ou les uns aux autres et espacés l'un de l'autre ou les uns des autres.

12. Jante (10 ; 1010 ; 1110 ; 1210 ; 1310) selon l'une quelconque des revendications 6 ou 7 à 11 lorsqu'elle dépend de la revendication 6, dans laquelle la section radiale de la jante (10 ; 1010 ; 1110 ; 1210 ; 1310) qui est munie du revêtement (28) suit au moins partiellement un profil efficient du point de vue aérodynamique (54, 60), de préférence le profil efficient du point de vue aérodynamique (54, 60) est un profil aérodynamique NACA, de préférence un profil aérodynamique NACA symétrique, et dans laquelle ledit revêtement (28) suit un arc de circonférence qui est un arc du cercle en position antérieure (56).

13. Roue de bicyclette (1000, 1100, 1200, 1300) comprenant une jante (10 ; 1010 ; 1110 ; 1210 ; 1310) selon l'une quelconque des revendications précédentes.

14. Roue de bicyclette (1000) selon la revendication 13, dans laquelle ladite roue est du type lenticulaire ou discoïdal, comprenant en outre un moyeu (1004) et une paire d'éléments en forme de disque (1002) qui connectent la jante (1010) au moyeu (1004), dans laquelle ladite roue (1000) suit au moins partiellement, selon une section axiale, un profil efficient du point de vue aérodynamique, dans laquelle le profil efficient du point de vue aérodynamique de la roue lenticulaire ou discoïdale (1000) suit, au niveau d'une région radialement externe, un profil aérodynamique NACA symétrique (60).

15. Roue de bicyclette (1200, 1300) selon la revendication 13, dans laquelle ladite roue est du type araignée, comprenant en outre un moyeu (1204, 1304) et une pluralité d'éléments structurels de type araignée (1202, 1302) qui connectent la jante (1210, 1310) au moyeu (1204, 1304), dans laquelle chaque élément structurel de type araignée (1202, 1302) suit, selon une section en coupe transversale de l'élément structurel de type araignée (1202, 1302), un profil efficient du point de vue aérodynamique qui est un profil aérodynamique NACA symétrique (58).
